# EUROPÄISCHE PATENTSCHRIFT

(11) **EP 1 915 045 B1**
(45) Veröffentlichungstag und Bekanntmachung des Hinweises auf die Patenterteilung: **17.02.2010**
(21) Anmeldenummer: 07009491.7
(22) Anmeldetag: 11.05.2007
(51) Int. Cl.: H05K 7/20, G06F 1/20, H02B 1/56

(54) **Betriebs-, Lager- und Transportbehälter für IT-Geräte**
Operating, storage and transport container for IT equipment
Support de fonctionnement, de stockage et de transport pour appareils informatiques

(30) Priorität: 30.08.2006 DE 102006040693
(43) Veröffentlichungstag der Anmeldung: 23.04.2008
(73) Patentinhaber: Thales Defence Deutschland GmbH, 75117 Pforzheim (DE)
(72) Erfinder: Mehner, Reinhard, 75210 Keltern-Ellmendingen (DE); Staib, Rüdiger, 75180 Pforzheim (DE); Thaler, Roderich, 75173 Pforzheim (DE)
(74) Vertreter: Dreiss

(56) Entgegenhaltungen:
- EP-A- 0 225 954
- EP-A- 0 560 191
- DE-A1- 19 716 043
- US-A- 5 801 632

## Beschreibung

Die vorliegende Erfindung betrifft einen Betriebs-, Lager- und Transportbehälter für Informationstechnologie (IT)-Geräte, umfassend: '
- ein verschließbares Gehäuse mit mindestens einem abnehmbaren Deckel,
- in dem Gehäuse (3) angeordnete Aufnahmemittel für die IT-Geräte und
- eine Klimaanlage zur Erzeugung und Aufrechterhaltung eines gleichmäßigen Klimas im Innenraum des Behälters.

Derartige Behälter sind aus der EP 0 560 191 A1 bekannt. Sie werden überall dort benötigt, wo innerhalb relativ kurzer Zeit an beliebigen Orten eine vollständige IT-Netzwerkstruktur aufgebaut und betrieben werden muss. Das ist im zivilen Bereich zum Beispiel bei einem mobilen Rechenzentrum der Fall, welches nach einem Ausfall eines stationären Rechenzentrums einer Bank oder einer Behörde (bspw. aufgrund eines Feuers oder Erdbebens) temporär durch ein mobiles Rechenzentrum ersetzt werden muss. Dabei ist es wichtig, dass das mobile Rechenzentrum schnell und ohne Beschädigung vor Ort transportiert und innerhalb kürzester Zeit in Betrieb genommen werden kann. Im militärischen Bereich werden Betriebs-, Lager- und Transportbehälter eingesetzt, um für eine IT-Netzwerkstruktur benötigte IT-Geräte möglichst schnell und unbeschädigt in ein entferntes Einsatzgebiet transportieren und dort innerhalb kürzester Zeit eine Netzwerkstruktur bspw. für ein Feldlazarett oder ein Flüchtlingslager errichten und betreiben zu können. Das Transportieren von IT-Geräten für eine mobile IT-Netzwerkstruktur in Betriebs-, Lager- und Transportbehältern ist aber auch für andere Personengruppen von Bedeutung, bspw. Polizei, Feuerwehr, Bundesgrenzschutz und Technisches Hilfswerk, um nur einige Beispiele zu nennen.
Die Behälter weisen im Inneren Aufnahmemittel in Form eines Rahmens, vorzugsweise eines 19"-Rahmens, mit Auflaufschienen auf, auf welchen die verschiedenen IT-Geräte eingeschoben und befestigt werden können. Der Rahmen ist über Schwingungsdämpfer an dem Gehäuse befestigt, um die IT-Geräte während des Transports vor Beschädigung aufgrund harter Stöße zu schützen. IT-Geräte, die in dem Behälter angeordnet werden, sind bspw. eine unterbrechungsfreie Stromversorgung (USV) als Einheit oder unterteilt in Steuereinheit und Akkueinheit, ein Datenkomprimierer (zum Komprimieren und wahlweise Verschlüsseln der zu übertragenden Daten), ein Medienwandler (zur Umwandlung elektrischer Signale in optische Signale und umgekehrt), ein Netzwerkschalter (sog.
Network-Switch), ein Netzwerk-Vermittlungsrechner (sog. Network-Router), eine Steckerleiste (sog. Patchfeld), ein Rechensystem in Form eines Computers, insbesondere in Form eines Servers, oder eine Datensicherungseinheit, bspw. ein Bandlaufwerk, um nur einige Beispiele zu nennen. Die in dem Rahmen angeordneten IT-Geräte werden miteinander verschaltet und verkabelt, so dass sie in einem im wesentlichen betriebsbereiten Zustand in dem Behälter vorgehalten werden. In einer Gehäusewand des Behälters sind Anschlüsse für eine Stromversorgung, sowie für Datenleitungen vorgesehen. Die IT-Geräte sind auch an diese Anschlüsse angeschlossen.
Wenn die in den Behältern angeordneten IT-Geräte in Betrieb sind, ist der Behälter verschlossen, und im Inneren des Behälters wird durch eine Klimaanlage ein gleichmäßiges Klima erzeugt und aufrechterhalten. Das ist wichtig, da die IT-Geräte relativ viel Abwärme erzeugen, die bei verschlossenem Behälter ohne eine Klimaanlage nicht aus dem Behälter abgeführt werden könnte. Ein Verzicht auf die Klimaanlage durch Öffnen des Behälters, bspw. indem einfach der Deckel abgenommen wird, ist in aller Regel nicht möglich, da der Einsatzort der IT-Geräte üblicherweise nicht im Inneren eines sauberen, trockenen und kühlen Gebäudes, sondern eher in einer ungeschützten Umgebung mit relativ viel Staub, Sand, und Schmutz und relativ hoher Feuchtigkeit und Temperatur liegt, bspw. in einem Zelt in einem Wüstengebiet oder einem Tropengebiet. Aus diesem Grund ist zumindest während des Betriebs der IT-Geräte der Deckel auf das Gehäuse aufgesetzt und sind die Behälter nahezu hermetisch abgedichtet. Es wird versucht, die Behälter mindestens nach IP 54 abzudichten.
Während des Transports der Behälter, insbesondere auf dem Luftweg in einem Laderaum ohne Druck- und Temperaturausgleich, wie dies häufig bei militärischen Transportmaschinen der Fall ist, ist der Behälter zum Teil sehr niedrigen Temperaturen im Bereich von einigen zig Minusgraden Celsius. Nach Erreichen des Einsatzgebiets und nach dem Aufbau der Netzwerkstruktur kann es deshalb eine relativ lange Zeit dauern, bis das Innere des Behälters die für den Betrieb erforderliche Mindesttemperatur für den Betrieb der IT-Geräte erreicht hat. Diese Mindesttemperatur liegt üblicherweise im Bereich von ca. 5°C. Bei einem Betrieb der IT-Geräte bei Temperaturen unterhalb dieser Mindesttemperatur können Fehlfunktionen der Geräte auftreten oder können die Geräte sogar Schaden nehmen. Auf jeden Fall erlöscht bei einem nicht ordnungsgemäßen Betrieb der IT-Geräte bei Temperaturen unterhalb der Mindesttemperatur jeglicher Garantie- und Gewährleistungsanspruch für die Geräte.
Nach dem Aufstellen der Betriebs-, Lager- und Transportbehälter im Einsatzgebiet werden diese über die in dem Gehäuse angeordneten Anschlüsse an die externe Zentral-Stromversorgung und an Datenleitungen angeschlossen. Der Anschluss der Behälter an die Zentral-Stromversorgung bewirkt in aller Regel, dass die Stromversorgung ebenfalls unmittelbar an den IT-Geräten anliegt. Dies ist problematisch, insbesondere wenn im Innenraum des Behälters die Mindesttemperatur noch nicht erreicht ist. Das bedeutet, dass in der Praxis entweder eine vorgegebene Ruhezeitdauer gewartet werden muss, bevor die Behälter an die Zentral-Stromversorgung angeschlossen werden können. Alternativ muss in regelmäßigen zeitlichen Abständen die Temperatur im Innenraum des Behälters manuell gemessen und nach Erreichen der Mindesttemperatur die Zentral-Stromversorgung an die Anschlüsse des Behälters angeschlossen werden. Dadurch gestaltet sich der Aufbau der Betriebs-, Lager- und Transportbehälter und die Integration der IT-Geräte in eine bestehende oder noch aufzubauende Netzwerkinfrastruktur als äußerst zeit- und personalintensiv. Zudem birgt die bekannte Vorgehensweise die Gefahr menschlicher Fehler derart, dass bspw. die Ruhezeitdauer nicht eingehalten wird oder die Temperatur im Innenraum des Behälters falsch gemessen wird, und der Behälter und damit auch die darin angeordneten IT-Geräte an die Stromversorgung angeschlossen werden, noch bevor die Mindesttemperatur erreicht ist.
Ausgehend von diesem Stand der Technik liegt der vorliegenden Erfindung die Aufgabe zugrunde, einen Betriebs-, Lager- und Transportbehälter der eingangs genannten Art dahingehend auszugestalten und weiterzubilden, dass das Aufstellen und Anschließen des Behälters und der darin angeordneten IT-Geräte schneller und sicherer ausgeführt werden kann.
Zur Lösung dieser Aufgabe wird ausgehend von dem Betriebs-, Lager- und Transportbehälter der eingangs genannten Art vorgeschlagen, dass
- der Behälter einen Temperaturschalter umfasst, welcher in Abhängigkeit von der Temperatur im Innenraum des Behälters die Stromversorgung der IT-Geräte aktiviert, und
- der Temperaturschalter die Stromversorgung der IT-Geräte erst dann aktiviert, wenn die Temperatur einen vorgegebenen Schwellwert überschritten hat.

Erfindungsgemäß ist also zwischen den externen Anschlüssen für die Zentral-Stromversorgung und der internen Stromversorgung der IT-Geräte der Temperaturschalter angeordnet, welcher erst durchschaltet, wenn die Temperatur im Innenraum des Behälters den vorgegebenen Schwellwert, welcher. der Mindesttemperatur entspricht, bei der die IT-Geräte betrieben werden dürfen, erreicht oder überschritten hat. Erfindungsgemäß kann also der Behälter bereits unmittelbar nach Erreichen des Einsatzorts aufgestellt und sofort an die Zentral-Stromversorgung angeschlossen werden. Der Thermoschalter sorgt automatisch dafür, dass die Stromversorgung erst dann an den IT-Geräten anliegt, wenn die Innenraumtemperatur in dem Behälter den Schwellwert erreicht oder überschritten hat. Falls die Innenraumtemperatur noch zu kalt ist, ist der Thermoschalter offen und an den IT-Geräten liegt noch kein Strom an, so dass eine Fehlfunktion oder gar Beschädigung der IT-Geräte wirksam und zuverlässig vermieden wird. Der Betreiber der IT-Geräte kann unmittelbar nach dem Aufstellen und Anschluss des Behälters weitere Behälter aufstellen und anschließen. Die Überwachung der Innenraumtemperatur in den Behältern und die Aktivierung der IT-Geräte nach dem Erreichen der Mindesttemperatur erfolgt bei der Erfindung automatisch zum gegebenen Zeitpunkt, ohne dass es eines Eingriffs des Betreibers bedarf.

Gemäß einer vorteilhaften Weiterbildung der Erfindung wird vorgeschlagen, dass der Behälter eine Heizung umfasst, welche unmittelbar oder mittels eines Zentralschalters mit einer von außen an den Behälter anschließbaren Zentral-Stromversorgung in Verbindung steht. Das bedeutet, dass unmittelbar nach dem Anschluss der Zentral-Stromversorgung an die entsprechenden Anschlüsse des Behälters die Heizung im Innenraum des Behälters aktiviert ist. Die Heizung wird nicht über den Temperaturschalter aktiviert bzw. deaktiviert. Die Heizung ist vorzugsweise als eine elektrische Heizung ausgebildet. Durch den Einsatz der Heizung erreicht die Temperatur im Inneren des Behälters schneller den Schwellwert, so dass die IT-Geräte nach kürzerer Zeit an die Stromversorgung angeschlossen werden können.

Gemäß einer bevorzugten Ausführungsform der Erfindung wird vorgeschlagen, dass der Behälter ein Gebläse umfasst, welches unmittelbar oder mittels eines Zentralschalters mit einer von außen an den Behälter anschließbare Zentral-Stromversorgung in Verbindung steht. Das bedeutet, dass unmittelbar nach dem Anschluss der Zentral-Stromversorgung an die entsprechenden Anschlüsse des Behälters das Gebläse im Innenraum des Behälters aktiviert ist. Das Gebläse wird nicht über den Temperaturschalter aktiviert bzw. deaktiviert. Das Gebläse sorgt für eine Luftzirkulation im Innenraum des Behälters, um die Temperatur schneller und gleichmäßiger im ganzen Innenraum zu verteilen. Dadurch wird zum Einen sichergestellt, dass die Heizung - falls vorhanden - nicht nur einen kleinen Bereich in ihrer unmittelbaren Umgebung, sondern gleichmäßig und homogen den gesamten Innenraum aufwärmt. Zudem wird sichergestellt, dass der Temperaturfühler des Temperaturschalters auch wirklich einen für den gesamten Innenraum repräsentativen Temperaturwert erfasst und nicht einen lediglich lokal gültigen Temperaturwert, der nicht der Temperatur in dem restlichen Innenraum entspricht. Durch den Einsatz des Gebläses kann die Zuverlässigkeit und Genauigkeit des Temperaturschalters nochmals deutlich erhöht werden.

Selbstverständlich kann der Behälter nur ein Gebläse und keine Heizung aufweisen. Ein solcher Behälter ist bspw. für warme Einsatzregionen geeignet. In diesem Fall hat das Gebläse den Vorteil, dass sich die von der Umgebung in den Innenraum des Behälters übergehende Wärme nicht nur aufgrund von Wärmekonvektion, sondern aktiv durch die Luftzirkulation des Gebläses im Innenraum des Behälters verteilt. In der Praxis werden die Betriebs-, Lager- und Transportbehälter in aller Regel jedoch über ein Heizung verfügen, was insbesondere zwei Gründe hat: zum Einen werden die in dem Behälter angeordneten IT-Geräte während der Aufheizphase nicht betrieben und erzeugen somit auch keine Abwärme, die zum Aufheizen des Innenraums genutzt werden könnte. Zum Anderen wirkt eine auf die Innenseite des Gehäuses aufgebrachte und/oder in den Rahmen zur Aufnahme der IT-Geräte eingebrachte Isolationsschicht wärmeisolierend und verhindert einen schnellen Wärmeübergang von der Umgebung in den Innenraum.

Vorteilhafterweise wird als Gebläse für die Luftzirkulation vor dem eigentlichen Betrieb der IT-Geräte ein der Klimaanlage zugeordnetes Gebläse verwendet. Das hat den Vorteil, dass kein zusätzliches Gebläse vorgesehen werden muss, sondern dass einfach ein bereits vorhandenes Gebläse der Klimaanlage eingesetzt wird. Die Steuerung des Gebläses muss nur derart verändert werden, dass das Gebläse bereits vor dem eigentlichen Betrieb der IT-Geräte (und damit unter Umständen auch vor dem Betrieb der Klimaanlage), insbesondere während der Heizphase unmittelbar nach dem Aufstellen des Behälters und dem Anschließen der Zentral-Stromversorgung an die Anschlüsse des Behälters, aktiviert ist.

Vorzugsweise ist die Klimaanlage als ein Split-Gerät ausgebildet. Das erlaubt einerseits eine hermetische Abdichtung des Innenraums gegenüber der Umgebung und gleichzeitig eine Klimatisierung des Innenraums. Insbesondere wird vorgeschlagen, dass die Klimaanlage eine mit der Umgebung des Behälters in Luftaustausch stehende Außeneinheit mit einem Kondensator und einem Kompressor und eine mit dem Innenraum des Behälters in Luftaustausch stehende Inneneinheit mit einem Verdampfer) aufweist, wobei die Außeneinheit über einen Kühlmittelschlauch mit der Inneneinheit verbunden ist, um eine Zirkulation von Kühlmittel zwischen Außeneinheit und Inneneinheit zu ermöglichen, und wobei der Inneneinheit der Klimaanlage das Gebläse zur Zirkulation der Innenluft am Verdampfer vorbei zugeordnet ist. Es wird also das Gebläse der Inneneinheit zur Luftzirkulation vor dem eigentlichen Betrieb der IT-Geräte eingesetzt.

Gemäß einer anderen vorteilhaften Weiterbildung der Erfindung wird vorgeschlagen, dass eines der in dem Behälter angeordneten IT-Geräte als eine unterbrechungsfreie Stromversorgung (USV) ausgebildet ist, wobei der Temperaturschalter die Stromversorgung der USV erst dann aktiviert, wenn die Temperatur den vorgegebenen Schwellwert überschritten hat. Die Stromversorgung der in dem Behälter angeordneten IT-Geräte erfolgt mittelbar über die USV. An der USV liegt die externe Zentral-Stromversorgung an. Der Temperaturschalter wirkt in Abhängigkeit der Innenraumtemperatur des Behälters derart auf die USV ein, dass nach dem Anschluss der Zentral-Stromversorgung an die entsprechenden Anschlüsse des Behälters die Aktivierung der USV und damit auch die Stromversorgung der übrigen IT-Geräte so lange verzögert wird, bis die Temperatur den Schwellwert erreicht oder überschritten hat.

Es wird vorgeschlagen, dass der Temperaturschalter Mittel zum Einstellen des Schwellwerts aufweist. Die Einstellmittel können außerhalb des Behälters oder aber im Inneren des Behälters angeordnet sein, so dass ein Verstellen des Schwellwerts nur bei geöffnetem Deckel und Zugang zum Innenraum möglich ist. Durch Verstellen des Schwellwerts kann dieser an die klimatischen Bedingungen, sowie Art, Anzahl und Erfordernisse der in dem Behälter betriebenen IT-Geräte angepasst werden. Der Schwellwert des Temperaturschalters liegt vorteilhafterweise oberhalb von 0°C. Vorzugsweise liegt der Schwellwert des Temperaturschalters bei etwa 5°C.

Bevorzugte Ausführungsbeispiele der Erfindung werden nachfolgend anhand der Figuren näher erläutert. Es zeigen:
- Fig. 1: einen erfindungsgemäßen Betriebs-, Lager- und Transportbehälter im Längsschnitt und
- Fig. 2: den erfindungsgemäßen Betriebs-, Lager- und Transportbehälter in schematischer Ansicht.

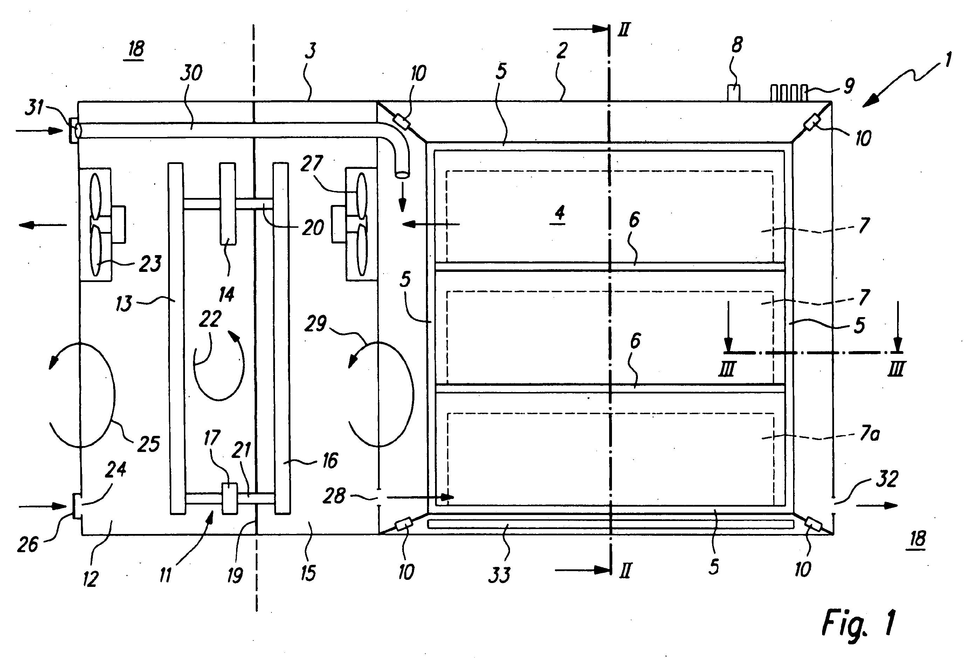

Ein erfindungsgemäßer Betriebs-, Lager- und Transportbehälter ist in Fig. 1 in seiner Gesamtheit mit dem Bezugszeichen 1 bezeichnet. Der Behälter 1 umfasst ein vorzugsweise quaderförmiges Gehäuse 2 mit mehreren Gehäusewänden. Auf der linken Seite von Fig. 1 weist das Gehäuse eine Öffnung auf, welche durch einen abnehmbaren Deckel 3 verschlossen ist. Der Deckel 3 ist mittels Schnellverschlüsse, bspw. in Form von Bajonettverschlüssen oder Spannverschlüssen, an dem Gehäuse 2 lösbar befestigt. Das Gehäuse 2 und der Deckel 3 sind vorzugsweise aus Aluminium gefertigt. Vorteile von Aluminium sind ein geringes Gewicht und eine gute Beständigkeit gegen Witterungseinflüsse und chemische Einflüsse.

Im Inneren 4 des Behälters 1 sind Aufnahmemittel in Form eines 19"-Rahmens 5 und mehrerer daran befestigter Auflaufschienen 6 angeordnet. Auf den Auflaufschienen 6 sind Informationstechnologie (IT)-Geräte 7 in den Rahmen 5 eingeschoben und dort befestigt. IT-Geräte 7, die in dem Behälter 1 angeordnet werden können, sind bspw. eine unterbrechungsfreie Stromversorgung (USV) 7a als Einheit oder unterteilt in Steuereinheit und Akkueinheit, ein Datenkomprimierer (zum Komprimieren und wahlweise Verschlüsseln der zu übertragenden Daten), ein Medienwandler (zur Umwandlung elektrischer Signale in optische Signale und umgekehrt), ein Netzwerkschalter (sog. Network-Switch), ein Netzwerk-Vermittlungsrechner (sog. Network-Router), eine Steckerleiste (sog. Patchfeld), ein Rechensystem in Form eines Computers, insbesondere in Form eines Servers, oder eine Datensicherungseinheit, bspw. ein Bandlaufwerk, um nur einige Beispiele zu nennen. Die in dem Rahmen 5 angeordneten IT-Geräte 7, 7a werden miteinander verschaltet und verkabelt, so dass sie in einem im wesentlichen betriebsbereiten Zustand in dem Behälter 1 vorgehalten werden.

In einer Wand des Gehäuses 2 sind ein Anschluss 8 für eine Zentral-Stromversorgung, sowie Anschlüsse 9 für Datenleitungen vorgesehen. Die USV 7a ist an den Energieversorgungsanschluss 8 angeschlossen. Die übrigen IT-Geräte 7 sind zur Energieversorgung an die USV 7a angeschlossen und erhalten ihre Betriebsenergie von dieser. Die USV 7a verfügt über eine integrierte oder separate Akkueinheit, durch welche die USV 7a selbst nach Ausfall der Zentral-Stromversorgung die interne Stromversorgung für die übrigen IT-Geräte 7 für eine gewisse Zeitdauer noch sicherstellen kann. Des weiteren sind die IT-Geräte 7, 7a an die Anschlüsse 9 angeschlossen, so dass durch Anschließen der Stromversorgung und der Datenleitungen an die Anschlüsse 8, 9 die in dem Behälter 1 angeordneten IT-Geräte 7, 7a in einen weitgehend betriebsbereiten Zustand versetzt und nach der Aktivierung aller IT-Geräte 7, 7a in eine bereits bestehende oder noch aufzubauende IT-Infrastruktur integriert werden können. Selbstverständlich können die Anschlüsse 8, 9 auch in dem Deckel 3 ausgebildet sein.

Der Rahmen 5 und die Schienen 6 bestehen bspw. aus Aluminiumprofilen mit einem vorzugsweise L-förmigen Querschnitt. An jeder Ecke des Rahmens 5 sind insgesamt acht Schwingungsdämpfer 10 angeordnet, welche die Aufnahmemittel 5, 6 und die darin angeordneten IT-Geräte 7, 7a vor Stößen schützen. Die Schwingungsdämpfer 10 sind relativ steif ausgelegt, um insbesondere schwere Stöße während des Transport des Behälters 1 zu dämpfen. Die Ausgestaltung der Aufnahmemittel kann beliebig variieren, insbesondere kann das Material und die Querschnittsform der Profile, die Anzahl und Anordnung der Auflaufschienen 6, die Anzahl, Ausgestaltung und Auslegung der Schwingungsdämpfer 10 von dem dargestellten und beschriebenen Ausführungsbeispiel abweichen.

In den Deckel 3 integriert ist eine Klimaanlage 11, die als ein sog. Split-Gerät ausgebildet ist. Die Klimaanlage 11 umfasst eine mit der Umgebung des Behälters 1 in Luftaustausch stehende Außeneinheit 12 mit einem Kondensator 13 und einem Kompressor 14 und eine mit dem Innenraum 4 des Behälters 1 in Luftaustausch stehende Inneneinheit 15 mit einem Verdampfer 16. Außerdem weist die Klimaanlage 11 ein in der Außeneinheit 12 angeordnetes Expansionsventil 17 auf. Die Trennung zwischen der Umgebung 18 und dem Innenraum 4 des Behälters 1 erfolgt durch eine Trennwand 19. Der Kompressor 14 steht über eine erste Verbindungsleitung 20 mit dem Verdampfer 16 in Verbindung. Der Verdampfer 16 steht seinerseits über eine weitere Verbindungsleitung 21 mit dem Expansionsventil 17 in Verbindung. Die beiden Verbindungsleitungen 20, 21 sind vorzugsweise zu einem einzigen Kühlmittelschlauch zusammengefasst, welcher die Außeneinheit 12 mit der Inneneinheit 15 verbindet, um eine Zirkulation 22 von Kühlmittel zwischen der Außeneinheit 12 und der Inneneinheit 15 zu ermöglichen. Das Split-Gerät unterbindet also jeglichen Luftaustausch zwischen Umgebung 18 und Innenraum 4 des Behälters 1. Dadurch wird eine Klimatisierung des Innenraums 4 auf vorgegebene Klimabedingungen möglich, ohne dass Staub, Sand oder Schmutz aus der Umgebung 18 in den Innenraum 4 eindringen können. Insbesondere wird der Innenraum 4 auf eine Temperatur im Bereich von etwa 0°C bis 40°C, vorzugsweise auf ca. 35°C, und auf eine Luftfeuchtigkeit im Bereich von 20% bis 85%, vorzugsweise auf 50%-60%, geregelt.

Die Funktionsweise der Klimaanlage 11 ist allgemein bekannt und sei hier nur kurz skizziert. In einem geschlossenen Kreislauf verdampft und kondensiert das Kältemittel (meist Ammoniak oder ein Halogenkohlenwasserstoff) und folgt dabei mehreren physikalischen Gesetzmäßigkeiten. Im Verdampfer 16 wird die Luft im Innenraum 4 des Behälters 1 durch Wärmeaustausch mit dem Kältemittel abgekühlt. Das Kältemittel verdampft im Verdampfer 16 bei niedrigem Druck und entzieht dadurch der Luft im Innenraum 4 Wärme. Der Dampf wird dann vom Kompressor 14 angesaugt und verdichtet. Im Kondensator 13 (Verflüssiger) wird der verdichtete Kältemitteldampf unter Wärmeabgabe an die Umgebung verflüssigt und strömt anschließend durch das Expansionsventil 17. Dort wird das Kältemittel auf niedrigen Druck entspannt und fließt wieder in den Verdampfer 16.

Die Klimaanlage 11 umfasst ein erstes dem Kondensator 13 zugeordnetes Gebläse 23 (oder Ventilator oder Lüfter), welches zusammen mit einer Öffnung 24 im Deckel 3 zur Umgebung 18 hin für eine Luftzirkulation 25 zwischen der Umgebung 18 und dem Inneren der Außeneinheit 12 am Kondensator 13 vorbei sorgt. Um das Innere der Außeneinheit 12 vor Staub, Sand oder Schmutz zu schützen, ist die Öffnung 24 durch ein Luftfilter 26 abgedeckt. Des weiteren umfasst die Klimaanlage 11 ein zweites Gebläse 27, welches zusammen mit einer Öffnung 28 zum Innenraum 4 des Behälters 1 hin für eine Luftzirkulation 29 zwischen dem Innenraum 4 und dem Inneren der Inneneinheit 15 am Verdampfer 16 vorbei sorgt. Durch die Luftzirkulation 29 können die vorgegebenen klimatischen Bedingungen im Innenraum 4 wirksam erreicht und gleichmäßig verteilt werden.

Der dargestellte Deckel 3 mit der integrierten Klimaanlage 11 wird nur während des stationären Betriebs der IT-Geräte 7 im Einsatzgebiet auf das Gehäuse 2 gesetzt. Während des Transports des Behälters 1 und der darin angeordneten IT-Geräte 7 wird der Klima-Deckel 3 abgenommen und durch einen Transportdeckel (nicht dargestellt) ersetzt, welcher die nach Abnahme des Klima-Deckels 3 entstandene Öffnung des Behälters 1 einfach wieder verschließt. Der Transportdeckel wird ebenfalls mittels Schnellverschlüsse, bspw. in Form von Bajonettverschlüssen oder Spannverschlüssen, an dem Gehäuse 2 lösbar befestigt. Der Klima-Deckel 3 wird, wahlweise zusammen mit der Akkueinheit einer in dem Behälter 1 angeordneten USV 7a in einem separaten Transportbehälter (nicht dargestellt) transportiert.

Um im Innenraum 4 des Behälters 1 auch solche IT-Geräte gefahrlos und vor allem VDE-konform betreiben zu können, welche im Betrieb ausgasen können, verfügt der Behälter 1 über eine Zwangsentlüftung bzw. eine Zwangsbelüftung des Innenraums 4. Die Zwangsentlüftung bzw. Zwangsbelüftung wird realisiert durch das Gebläse 27, welches über einen Schlauch 30 und eine Öffnung 31 Luft aus der Umgebung 18 in den Innenraum 4 saugt. Der daraus resultierende Überdruck im Innenraum 4 kann über eine Öffnung 32 im Gehäuse 2 abgebaut werden. Die aus der Umgebung 18, durch den Schlauch 30, in den Innenraum 4 und durch die Öffnung 32 wieder zurück an die Umgebung 18 zirkulierende Luftmenge/Zeiteinheit beträgt höchstens 1% der gesamten im Innenraum 4 durch das Gebläse 27 umgewälzten Luftmenge/Zeiteinheit, so dass die klimatischen Bedingungen im Innenraum 4 durch die Zwangsbelüftung bzw. Zwangsentlüftung nicht beeinträchtigt werden. Selbstverständlich hat der erfindungsgemäße Betriebs-, Lager- und Transportbehälter 1 die angegebenen Vorteile auch ohne die beschrieben Zwangsbelüftung bzw. Zwangsentlüftung.

Im Innenraum 4 des Behälters 1, vorzugsweise im Bereich des Bodens des Behälters 1, ist eine Heizung 33 angeordnet, welche insbesondere nach einem Transport des Behälters 1 bei niedrigen Temperaturen vor dem Betrieb der IT-Geräte 7, 7a den Innenraum 4 möglichst rasch wieder auf das für den Betrieb der IT-Geräte 7, 7a vorgesehene Temperaturfenster erwärmen soll. Das Aufheizen des Innenraums 4 kann durch den Betrieb des Gebläses 27 beschleunigt werden.

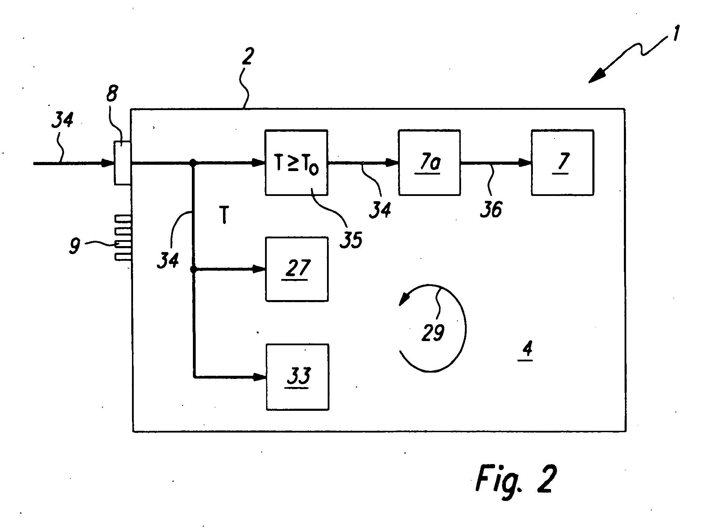

In Fig.2 ist der Betriebs-, Lager- und Transportbehälter 1 in einer schematischen Ansicht gezeigt. Aus Gründen der besseren Übersichtlichkeit ist nur das Gehäuse 2 ohne den Deckel 3 dargestellt. An der Außenseite des Gehäuses 2 sind der Anschluss 8 für die externe Zentral-Stromversorgung 34 und die Anschlüsse 9 für die Datenleitungen angeordnet. Im Innenraum 4 des Behälters 1 sind die IT-Geräte 7 umfassend u.a. die USV 7a angeordnet. Ebenfalls dargestellt sind die Heizung 33 und das Gebläse 27. Durch das Gebläse 27 wird die Luftzirkulation 29 im Innenraum 4 erzeugt, welche für eine rasche und gleichmäßige Verteilung der Wärme der Heizung 33 sorgt. Zusätzlich ist in dem Behälter 1 ein Temperaturschalter oder Thermoschalter 35 vorgesehen, welcher die Temperatur T im Innenraum 4 misst, mit einem Schwellwert T₀ vergleicht und die Stromzufuhr zu der USV 7a erst freigibt, wenn die Innenraumtemperatur T den Schwellwert T₀ erreicht oder überschritten hat. Der Schwellwert T₀ kann frei vorgegeben werden. Vorzugsweise entspricht der Schwellwert T₀ einer Mindesttemperatur, die zum Betrieb der IT-Geräte 7, 7a in dem Innenraum 4 mindestens herrschen muss. Der Schwellwert T₀ entspricht bspw. +5°C.

Anhand der Fig. 2 kann man deutlich erkennen, dass die externe Zentral-Stromversorgung 34 über den Anschluss 8 direkt an der Heizung 33, dem Gebläse 27 und an dem Temperaturschalter 35 anliegt. Das bedeutet also, dass - sofern kein Zentralschalter vorgesehen ist - die Heizung 33 und das Gebläse 27 aktiviert werden, sobald ein Stecker für die externe Stromversorgung 34 in den Anschluss 8 gesteckt wird. Falls zwischen Anschluss 8 und Heizung 33, Gebläse 27 und/oder Temperaturschalter 35 noch ein Zentralschalter (nicht dargestellt) vorgesehen ist, muss dieser selbstverständlich eingeschaltet werden, damit die Stromversorgung 34 an Heizung 33, Gebläse 27 und/oder Temperaturschalter 35 anliegt. Wichtig ist aber, dass zunächst, das heißt solange die Temperatur T kleiner als der Schwellwert T₀ ist, kein Strom an der USV 7a und den übrigen IT-Geräten 7 anliegt. Dadurch können Fehlfunktionen der IT-Geräte 7, 7a oder gar Beschädigungen sicher und zuverlässig vermieden werden.

Sobald die Temperatur T den Schwellwert T₀ erreicht bzw. überstiegen hat, schließt der Temperaturschalter 35, wodurch die Stromversorgung 34 an die USV 7a angelegt wird. Die USV 7a wird also aktiviert und kann ihrerseits eine von ihr generierte interne Stromversorgung 36 an die übrigen IT-Geräte 7 anlegen, die dadurch ebenfalls aktiviert werden. Die interne Stromversorgung 36 kann nach Art (Wechselstrom, Gleichstrom) und Höhe der externen Stromversorgung 34 entsprechen oder von dieser abweichen.

So ist es bspw. denkbar, dass der USV 7a ein Transformator (nicht dargestellt) zugeordnet ist, der die externe Stromversorgung in die interne Stromversorgung umwandelt.

Selbstverständlich kann der Behälter 1 mehr als nur einen Deckel 3 aufweisen. Insbesondere kann der Behälter 1 jeweils einen Deckel an der Vorderseite und an der Rückseite des Behälters 1 aufweisen. Wahlweise können auch mehrere Deckel mit einer Klimaanlage 11 ausgerüstet sein. Außerdem können mehrere Deckel auf einer Seite des Behälters 1 angeordnet sein. Der Behälter 1 weist an seiner Außenseite, vorzugsweise an zwei gegenüberliegenden Seiten, klappbare Haltegriffe (nicht dargestellt) auf, an denen der Behälter 1 zum Transport von Personen fest und sicher ergriffen und angehoben werden kann. Vorzugsweise sind auf jeder Seite zwei Haltegriffe vorgesehen, so dass der Behälter 1 von insgesamt vier Personen angehoben und transportiert werden kann. An der Unterseite des Behälters 1 können höhenverstellbare und/oder federnd nachgiebige Füße (nicht dargestellt) vorgesehen sein, um einen sicheren Stand des Behälters 1 sicherzustellen. In einer Wand des Behälters 1 können außerdem Druckausgleichsmittel (nicht dargestellt) angeordnet sein, um Druckschwankungen während des Transports des Behälters 1 ausgleichen zu können und damit ein Verformen des Behälters 1 aufgrund von Druckdifferenzen zwischen Innenraum 4 und Umgebung 18 zu vermeiden.

## Patentansprüche

1. Betriebs-, Lager- und Transportbehälter (1) für Informationstechnologie (IT)-Geräte (7), umfassend:
- ein verschließbares Gehäuse (2) mit mindestens einem abnehmbaren Deckel (3),
- in dem Gehäuse (3) angeordnete Aufnahmemittel (5, 6, 10) für die IT-Geräte (7) und
- eine Klimaanlage (11) zur Erzeugung und Aufrechterhaltung eines gleichmäßigen Klimas im Innenraum (4) des Behälters (1),
**dadurch gekennzeichnet, dass**
- der Behälter (1) einen Temperaturschalter (35) umfasst, welcher in Abhängigkeit von der Temperatur (T) im Innenraum (4) des Behälters (1) die Stromversorgung (34) der IT-Geräte (7, 7a) aktiviert, und
- der Temperaturschalter (35) die Stromversorgung (34) der IT-Geräte (7, 7a) erst dann aktiviert, wenn die Temperatur (T) eine vorgegebene Mindesttemperatur (T₀) überschritten hat, bei der die IT-Geräte betrieben werden dürfen.

2. Betriebs-, Lager- und Transportbehälter (1) nach Anspruch 1, **dadurch gekennzeichnet, dass** der Behälter (1) eine Heizung (33) umfasst, welche unmittelbar oder mittels eines Zentralschalters mit einer von außen an den Behälter (1) anschließbaren Zentral-Stromversorgung (34) in Verbindung steht.

3. Betriebs-, Lager- und Transportbehälter (1) nach Anspruch 1 oder 2, **dadurch gekennzeichnet, dass** der Behälter (1) ein Gebläse (27) umfasst, welches unmittelbar oder mittels eines Zentralschalters mit einer von außen an den Behälter (1) anschließbare Zentral-Stromversorgung (34) in Verbindung steht.

4. Betriebs-, Lager- und Transportbehälter (1) nach Anspruch 3, **dadurch gekennzeichnet, dass** das Gebläse ein der Klimaanlage (11) zugeordnetes Gebläse (27) ist.

5. Betriebs-, Lager- und Transportbehälter (1) nach Anspruch 4, **dadurch gekennzeichnet, dass** die Klimaanlage (11) eine mit der Umgebung (18) des Behälters (1) in Luftaustausch stehende Außeneinheit (12) mit einem Kondensator (13) und einem Kompressor (14) und eine mit dem Innenraum (4) des Behälters (1) in Luftaustausch stehende Inneneinheit (15) mit einem Verdampfer (16) aufweist, wobei die Außeneinheit (12) über einen Kühlmittelschlauch (20, 21) mit der Inneneinheit (15) verbunden ist, um eine Zirkulation von Kühlmittel zwischen Außeneinheit (12) und Inneneinheit (15) zu ermöglichen, und wobei der Inneneinheit (15) der Klimaanlage (11) das Gebläse (27) zur Zirkulation (29) der Innenluft am Verdampfer (16) vorbei zugeordnet ist.

6. Betriebs-, Lager- und Transportbehälter (1) nach einem der Ansprüche 1 bis 5, **dadurch gekennzeichnet, dass** eines der in dem Behälter (1) angeordneten IT-Geräte (7) als eine unterbrechungsfreie Stromversorgung (USV; 7a) ausgebildet ist, wobei der Temperaturschalter (35) die Stromversorgung (34) der USV (7a) erst dann aktiviert, wenn die Temperatur (T) die vorgegebene Mindesttemperatur (T₀) überschritten hat.

7. Betriebs-, Lager- und Transportbehälter (1) nach einem der Ansprüche 1 bis 6, **dadurch gekennzeichnet, dass** der Temperaturschalter (35) Mittel zum Einstellen der Mindesttemperatur (T₀) aufweist.

8. Betriebs-, Lager- und Transportbehälter (1) nach einem der Ansprüche 1 bis 7, **dadurch gekennzeichnet, dass** die Mindesttemperatur (T₀) oberhalb von 0°C liegt.

9. Betriebs-, Lager- und Transportbehälter (1) nach Anspruch 8, **dadurch gekennzeichnet, dass** die Mindesttemperatur (T₀) bei 5°C liegt.

## Claims

1. An operating, storage and transport container (1) for information technology (IT) devices (7), comprising
- a lockable housing (2) with at least one removable cover (3),
- storage means (5, 6, 10) for the IT devices (7) arranged in the housing (2), and
- an air-conditioning installation (11) for generating and maintaining an even climate in the interior (4) of the container (1),
**characterized in that**
- the container (1) includes a temperature switch (35), which activates the current supply device (34) of the IT devices (7, 7a) as a function of the temperature (T) in the interior (4) of the container (1), and
- the temperature switch (35) only activates the current supply device (34) of the IT devices (7, 7a), if the temperature (T) has exceeded a preset minimum temperature (Tₒ) at which the IT devices may be operated.

2. The operating, storage and transport container (1) in accordance with claim 1, **characterized in that** the container (1) includes a heater (33), which is connected directly or by means of a central switch with a central current supply device (34), which can be connected from the outside with the container (1).

3. The operating, storage and transport container (1) in accordance with claim 1 or 2, **characterized in that** the container (1) includes a blower (27) which is connected directly or by means of a central switch with a central current supply device (34), which can be connected with the container (1) from the outside.

4. The operating, storage and transport container (1) in accordance with claim 3, **characterized in that** the blower is a blower (27) assigned to the air-conditioning installation (11).

5. The operating, storage and transport container (1) in accordance with claim 4, **characterized in that** the air-conditioning installation (11) is comprised of an exterior unit (12), which is in an air-exchanging connection with the surroundings (18) of the container (1) and has a condenser (13) and a compressor (14), and an interior unit (15), which is in an air-exchanging connection with the interior (4) and has an evaporator (16), wherein the exterior unit (12) is connected with the interior unit (15) by means of a coolant hose (20, 21) in order to make possible a coolant circulation between the exterior unit (12) and the interior unit (15), and wherein the blower (27) is assigned to the interior unit (15) for circulating the interior air past the evaporator (16).

6. The operating, storage and transport container (1) in accordance with one of claims 1 to 5, **characterized in that** one of the IT devices (7) arranged in the container (1) is designed in the form of an interruption-free current supply device (USV; 7a), wherein the temperature switch (35) activates the current supply device (34) of the USV (7a) only after the temperature (T) has exceeded the preset minimum temperature (Tₒ).

7. The operating, storage and transport container (1) in accordance with one of claims 1 to 6, **characterized in that** the temperature switch (35) has means for setting the minimum temperature (Tₒ).

8. The operating, storage and transport container (1) in accordance with one of claims 1 to 7, **characterized in that** the minimum temperature (Tₒ) lies above 0°C.

9. The operating, storage and transport container (1) in accordance with claim 8, **characterized in that** the minimum temperature (Tₒ) lies at 5°C.

## Revendications

1. Contenant de fonctionnement, de stockage et de transport (1) pour appareils de technologie de l'information (TI) (7), comportant :
- un boîtier (2) pouvant être fermé comprenant au moins un couvercle (3) amovible,
- des moyens de réception (5, 6, 10) disposés dans le boîtier (3) pour les appareils de TI (7) et
- un climatiseur (11) destiné à générer et conserver un climat uniforme dans l'espace intérieur (4) du contenant (1),
**caractérisé en ce que**
- le contenant (1) comporte une sonde thermostatique (35) activant l'alimentation en courant (34) des appareils de TI (7, 7a) en fonction de la température (T) dans l'espace intérieur (4) du contenant (1), et
- la sonde thermostatique (35) n'active l'alimentation en courant (34) des appareils de TI (7, 7a) que lorsque la température (T) a dépassé une température minimale (T₀) prédéterminée à laquelle les appareils de TI fonctionnent.

2. Contenant de fonctionnement, de stockage et de transport (1) selon la revendication 1, **caractérisé en ce que** le contenant (1) comporte un dispositif de chauffage (33) relié directement ou au moyen d'un commutateur central à une alimentation centrale en courant (34) pouvant être raccordée de l'extérieur au contenant (1).

3. Contenant de fonctionnement, de stockage et de transport (1) selon la revendication 1 ou 2, **caractérisé en ce que** le contenant (1) comporte une soufflante (27) reliée directement ou au moyen d'un commutateur central à une alimentation centrale en courant (34) pouvant être raccordée de l'extérieur au contenant (1).

4. Contenant de fonctionnement, de stockage et de transport (1) selon la revendication 3, **caractérisé en ce que** la soufflante est une soufflante (27) associée au climatiseur (11).

5. Conteneur de fonctionnement, de stockage et de transport (1) selon la revendication 4, **caractérisé en ce que** le climatiseur (11) comprend une unité extérieure (12) échangeant l'air avec l'atmosphère (18) du contenant (1) et dotée d'un condensateur (13) et d'un compresseur (14) et une unité intérieure (15) échangeant l'air avec l'espace intérieur (4) du contenant (1) et dotée d'un évaporateur (16), l'unité extérieure (12) étant reliée par un tuyau de réfrigérant (20, 21) à l'unité intérieure (15), afin de permettre une circulation du réfrigérant entre l'unité extérieure (12) et l'unité intérieure (15), et la soufflante (27) destinée à faire circuler (29) l'air intérieur devant l'évaporateur (16) étant associée à l'unité intérieure (15) du climatiseur (11).

6. Contenant de fonctionnement, de stockage et de transport (1) selon l'une des revendications 1 à 5, **caractérisé en ce qu'**un des appareils de TI (7) disposés dans le contenant (1) est conçu comme une alimentation en courant ininterrompue (USV ; 7a), la sonde thermostatique (34) n'activant l'alimentation en courant (34) de l'USV (7a) que lorsque la température (T) a dépassé la température minimale (T₀) prédéterminée.

7. Contenant de fonctionnement, de stockage et de transport (1) selon l'une quelconque des revendications 1 à 6, **caractérisé en ce que** la sonde thermostatique (35) comprend des moyens destinés à régler la température minimale (T₀) .

8. Contenant de fonctionnement, de stockage et de transport (1) selon l'une quelconque des revendications 1 à 7, **caractérisé en ce que** la température minimale (T₀) est supérieure à 0°C.

9. Contenant de fonctionnement, de stockage et de transport (1) selon la revendication 8, **caractérisé en ce que** la température minimale (T₀) est de 5°C.
